Europäisches Patentamt

European Patent Office

Office européen des brevets

(11) Publication number: **0 513 463 A1**

# EUROPEAN PATENT APPLICATION

(21) Application number: **91500044.2**

(22) Date of filing: **17.05.91**

(51) Int. Cl.5: **G01G 19/12**

(43) Date of publication of application:
**19.11.92 Bulletin 92/47**

(84) Designated Contracting States:
**AT BE CH DE DK ES FR GB GR IT LI LU NL SE**

(71) Applicant: **Padro i Rubi, D. Ferran**
**Ctra. de Vic, 185-187**
**E-08240 Manresa (Barcelona)(ES)**

(72) Inventor: **Padro i Rubi, D. Ferran**
**Ctra. de Vic, 185-187**
**E-08240 Manresa (Barcelona)(ES)**

(74) Representative: **Aguilar Forment, Domenec**
**(ES)**
**c/o Aguilar & Revenga Puerto Principe, 7**
**E-08027 Barcelona(ES)**

(54) Weighing device for use in goods transport vehicles.

(57) It includes at least one pair of U-shaped sections (1,2) of different widths, the narrower one of which is in the lower position, opposite the wider section which is in the upper position, their inner spaces being opposite each other, with the possibility of mutual movement, in a separation determined by several rods threaded in a crosswise arrangements and adjustable in position by means of locking nuts and washers, the lower section being held by at least several extensometric-type load cells (3), which have a vertical rod (5) acting on them which is joined to the upper section (1) and capable of positional adjustment, the separation of the two sections being regulated by at least one vertical threaded bolt (7) with adjustable position, held by the upper section (1) and with its end supported on the lower section. (2).

To be used for measuring and indication the load present in the transport lorry body.

FIG. 1

This Patent of Invention refers to a weighting device built into goods transport vehicles.

The use of the device in question makes it possible inmediately to measure and indicate the weight loaded on a lorry, without needing to place the lorry on a weighing platform, which means a considerable saving in time an labour.

It is a well-know fact that, until now, the load carried by a lorry or other transport vehicle has been measured and weight by using fixed scales equiped with a platform on which the loaded vehicle is placed, and the tare or weight when empty is deducted from the total weight to find the load value. This system is inconvenient in that is necessary to drive the loaded vehicle expressly to the place where the scales are installed, which is of course time-consuming. Often, the speed of the operation, imposed by job requirements, prevents very exact values from boing obtained, which would be deducted from repeated weighings. Furthermore, being out of doors, scales require special maintenance for the measurements to be reliable, which constantly involves special care.

Therefore, there has been a need felt for the device for weighting the load carried by a lorry to be built into the vehicle itself, which would make it possible for the load to be placed and weighed at the same time. Clear advantages of this are time, space and safety, added to the fact that maintenance of relatively small scales is notably easier than that of normal static lorry-weighing scales.

As has been said, the weighting device that is the object of this patent is designed to be built into the bodywork of a lorry, van or other transport vehicle, and consists of 2 main parts, one mechanical and another electrical, the second having a load weight viewer that acts acting on the mechanical part, while the latter has appropriate elastic and looking means. The former operate during measurement and the latter while the vehicle is moving, when of course weighting operations should no be made.

Operation of the device that will be described is based on the use of the so-called load cells or extensometric units, in which the application of mechanical forces to a crystalline body of a certain substance is turned into the formation of electrical charges in the body surfaces, charges that can be transfered into electrical signals proportional in size to the deformation undergone by the repeated body. Processing and interpretation of the signals makes it possible to obtain correlatively an indication of the size if the deforming force, that is the weight acting on the cells in question.

In order to make explanation easier, this report is accompanied by drawing which, by way of illustrative and not restrictive example, show a case of a weighing device designed to be built into goods transport vehicles according to the claim principles.

In the drawings:

Figure 1 is a side view in lengthwise section of one of the devices which form part of the weighing equipment described.

Figure 2 is a crosswise section of the actual structure of the device.

Figure 3 is a transport lorry equipped with the type of weighting device described, and Figure 4 is an elevational view and rear view of the lorry itself with the device built in.

The component parts numbered in the drawings relate to the parts listed below.

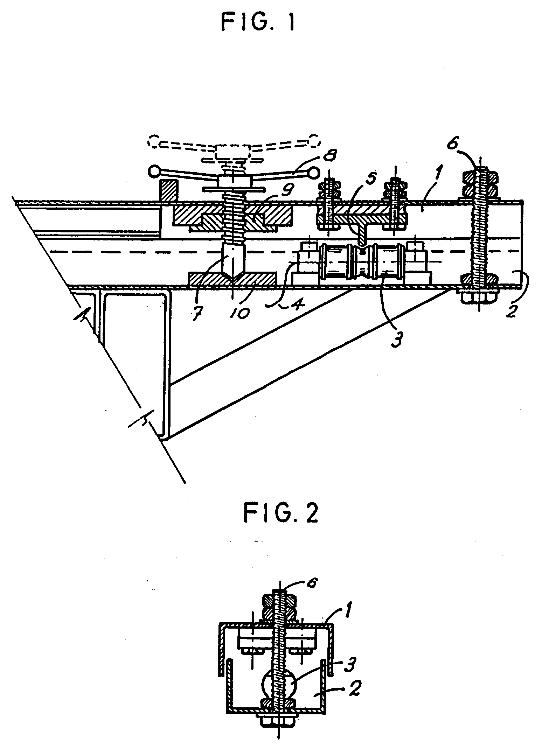

The equipment includes at least two measuring devices, similar in structure and operation, each one of them defined by two beams or double sectioned U-shaped members (1) and (2), the first of which is placed over the second because it is wider and has the possibility of making veertical shifts according to the pressure exerted on the first section, in the layout included in the view of Figure 2.

Inside the space defined by the two attached sections there are at least two sensitive parts, each one including a conventional-type load cell (3). situated at each end of the pair of joined sections. By means of the appropriate conductor cable (4), the load cell is placed in communication with an electronic circuit which processed the signals provided by the cell, and which will also convert them, generating orders applied to a viewer screen on which will appear the numerical values of the weights resting on the cell (3) and as a result over the upper section (1).

Acting on the cell (3) is a rod (5), attached by means of a rigid mounting formed, for example, by threaded bolts and looging nuts, in such a way that deformation of the section (1) and the corresponding vertical movements of the rod (5) are transferred to the load cell (3), and from this the corresponding electric signals are obtained.

The bolts (8) keep sections (1) and (2) duly separated, at all times ensuring the appropriate distance which can be adjusted with looking nuts.

In order to fix the positions of sections (1) and (2) so that the former cannot get too close the second from the effect of the load resting on it, a moving boom has been designed, made up of the threaded bolt (7), the head of which can be moved by means of arms (8) and held, on one side, by the plate or ring (9), as a strike or nut belonging to the thread of the rod, while the end of the latter lines up over a block (10), made up of a hard material provided with an inlet, and joined to the lower section (2).

Examination of Figure 1 makes it possible to understand the electromechanical operation of the component parts of the device described. The pressure exerted on section (1), for example, a vertical force due to the weight of the load situated in the body of the lorry, is transmitted to the rod (5), which, acting on the cell (3), determines that the latter is activated and that signals are sent to the electronic circuit. These signals are converted into numerical signs on the viewer soreen. These external forces, due to loads deposited over the body of the lorry and transmitted to the measuring device necessarily cause the relative movement of the upper section (1), over the lower one (2), as long as the blocking boom (7) allows it, according to its position. When there is no need for the load to operate the weighing device, for example, during the periods in which the vehicle is moving, the position of the rod (7) is altered so as to lock the upper section (1) completely, which leaves the load cell (3) inactive.

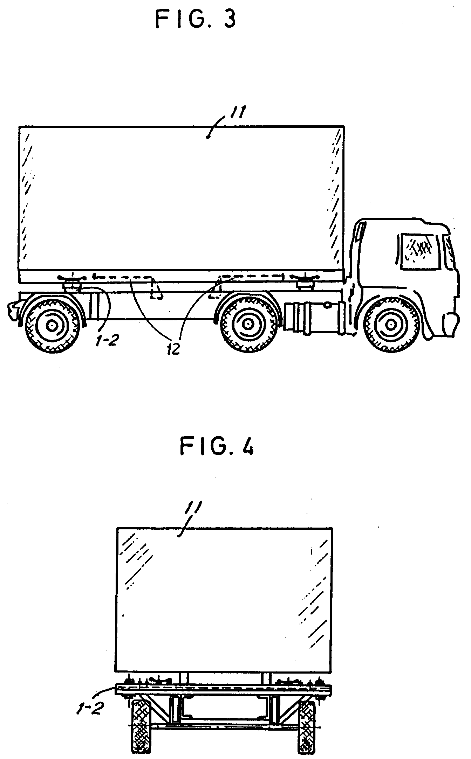

Figure 3 shows how the chassis of the lorry supports the load box (11) by means of two devices of the type described, placed crosswise in relation to the main direction of the frame and each one of which has two operating units of the type shown in Figure 1. The sections or beams (1) and (2) are supported firmly on the vehicle chassis members in such a way that when the vehicle receives the load and the device is in its operating position, the driver of the vehicle can inmediately read the values of the load at all times on the screen that is normally situated inside the cab, and can note what is being put in, untill the stipulated limit is reached.

When the stipulated limit of the load is reached, the measuring device set is blocked, by operating the various locking blocks or nuts (7). Then the vehicle can be started without risk of damage to the measuring device, since the latter may not be started, although a jerking or vibrating of the vehicle, due to the state of the paving over which it is running, may be found.

The different signals form the cells (3) are integrated into the reading point so that single uniform values are provided.

The devices described may also be placed on the vehicle's shock-absorber springs, with appropriate support parts, as well as adjustable stops and additional component parts, being fixed to the cells.

The vehicle bodywork is locked in relation to its central frame thanks to some tension bars (12) which prevent any movement caused by forces in a horizontal direction, in turn caused by sudden accelerations or brakings that may arise while the vehicle is moving. These tension bars, made of rigid metal rods and placed on the slant, prevent the said movements forwards and backwards of the whole bodywork, without hindering the vertical forces caused by the load, and which are those necessary for determining the size of the load. The total movement in the vertical direction and with a full load is at the most 5mm.

The weighting device that is described enables very high accuracy to be obtained, up to one tenthousandth of a division, depending on the unit of weight used. Thus, for a maximum permitted capacity of 10 tons for the vehicle load, an accuracy of 1 kg can be obtained, which is extremely useful for any kind of transport.

The pairs of sections (1) and (2) may also be placed parallel and along the vehicle above the frame members and attached to it below to the bodywork on top, thereby not needing to alter the system of attaching the load box to the frame, which is usual in any vehicle which does not have the device in question built-in.

In the case cited, the blocking system is eliminated and replaced by a fixed system adjusted to the flexion exerted by the load at its maximum capacity. Also in this case the load cells (weight detectors) should be over-designed, and so reference is made to their maximum weight acceptance capacity.

The load cells (3) used consist of individual carrier blocks, each with four strain gauges, which have the property that, when subject to size deformations, generate on their surfaces electric charges proportional in size to these deformations. The blocks and their gauges receive the vertical action of the weight of the load provide electric signals, the processing of which in a suitable electronic circuit gives rise to an indication relating to the weight and displayed on a numerical viewing screen.

**Claims**

1. Weighting device to be used in goods transport vehicles, designed for inmediate measurement and indication of the load of a transport lorry, characterised by including several devices sensitive to the vertical forces determined by the weight, each one of these devices being made up of a pair of U-shaped section beams, arranged horizontally and opposite each other, with their holes facing each other, the wider beam loosely straddling the narrower beam, the former having the possibility of moving over the latter according to the forces exerted on it, there being between the two sections some means for restricting them from separating too much from each other, and the two beams from getting too close, and there being several piezoelectric load cells being fitted betweein the two beams, attached by means of their leadouts with electric circuits which process the signals generated by the cells and linked to viewing devices which display the size of the forces received.

2. Weighting device to be used in goods transport vehicles, designed for inmediate measurement and indication of the load of a transport lorry, according to claim 1, characterised by including means of pressure for activating the load cells according to the size of the weight resting on the device relating to the load placed on the body of the lorry, made up of a vertical rod mounted in an adjustable position on the upper beam and opposite the load cell, mounted on the lower beam. The precision adjustment of the rod support position is made by means of threaded bolts and locking nuts in the head part of the upper beam..

3. Weighting device to be used in goods transport vehicles, designed for inmediate measurement and indication of the load of a transport lorry, according to claim 1, characterised becuse the restriction of separation between the two beams is made by a threaded bolt, with adjustable position, inserted in a component part perforated and threaded as a nut, joined to the upper beam, the termination of which is preferably cone-ended, connected to an inlet of the same shape, made up of a plate of hard material fixed inside the lower beam, the bolt head having means that help its operation, specifically its position adjustment lengtwise movement, these means expediently consisting of arms for manual operation to carry out positional adjustment.

4. Weighting device to be used in goods transport vehicles, designed for inmediate measurement and indication of the load of a transport lorry, according to claim 1, characterised because complete installation of the device includes at least two pairs of sections of the type described, placed at the ends of the vehicle body and fixed by the lower section to the frame members, while the upper section is linked to the vehicle load-carrier body, the size of wuich is displayed on a numerical indicator placed in the driver's cab.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3 063 576 (W.F.HOFMEISTER) <br> * column 1, line 68 - column 2, line 19; figures 3,4 * | 1 | G01G19/12 |
| Y | US-A-3 780 817 (J.A.VIDEON) <br> * column 5, line 38 - column 6, line 9; figures 6,7 * | 1 | |
| A | | 2,4 | |
| A | US-A-3 603 418 (K.J.SCHMIDT ET AL.) <br> * column 4, line 13 - line 15; figure 3 * | 3 | |
| A | EP-A-0 054 000 (VIBRO-METER SA) <br> * page 6, line 1 - line 24; figure 4 * | 1 | |
| | | | **TECHNICAL FIELDS SEARCHED (Int. Cl.5 )** |
| | | | G01G |

The present search report has been drawn up for all claims

| Place of search | Date of completion of the search | Examiner |
|---|---|---|
| THE HAGUE | 15 JANUARY 1992 | GANCI P.A. |